# EUROPÄISCHE PATENTSCHRIFT

(11) **EP 2 215 901 B1**
(45) Veröffentlichungstag und Bekanntmachung des Hinweises auf die Patenterteilung: **15.05.2013**
(21) Anmeldenummer: 08852640.5
(22) Anmeldetag: 17.11.2008
(51) Int. Cl.: H05K 7/20, H02P 7/29, H02P 29/02

(54) **LÜFTERANORDNUNG MIT BEEINFLUSSUNG DER AUFGENOMMENEN ELEKTRISCHEN LEISTUNG**
FAN ARRANGEMENT IN WHICH THE CONSUMED ELECTRIC POWER IS INFLUENCED
ENSEMBLE VENTILATEUR A MODULATION DE LA PUISSANCE ELECTRIQUE ABSORBEE

(30) Priorität: 19.11.2007 DE 102007057100
(43) Veröffentlichungstag der Anmeldung: 11.08.2010
(73) Patentinhaber: Ebm-Papst St. Georgen GmbH & CO. KG, 78112 St. Georgen (DE)
(72) Erfinder: GUTMANN, Markus, 78232 March (DE); KARWATH, Arno, 78652 Deisslingen (DE); DUFNER, Thomas, 78136 Schonach (DE)
(74) Vertreter: Raible, Tobias
(86) Internationale Anmeldenummer: PCT/EP2008/009702
(87) Internationale Veröffentlichungsnummer: WO 2009/065540

(56) Entgegenhaltungen:
- EP-A- 0 518 538
- DE-A1-102007 011 629
- DE-U1-202004 006 714
- US-A- 4 268 781
- US-A1- 2003 091 441
- US-A1- 2006 226 799

## Beschreibung

Die Erfindung betrifft eine Lüfteranordnung mit Beeinflussung der von ihr aufgenommenen elektrischen Leistung.

Die EP 0 518 538 A2 zeigt einen Elektromotor für einen Lüfter. Einem Mikroprozessor werden Signale für die Batteriespannung, die Gegen-EMK und den Motorstrom zugeführt. Über ein Bedienfeld kann ein Luftfluss vorgegeben werden. Ein Konstanter-Luftfluss-Algorithmus ermittelt näherungsweise den aktuellen Luftfluss, und dieser wird mit dem vorgegebenen Luftfluss verglichen. In Abhängigkeit vom Ergebnis wird der Elektromotor angesteuert.

Die US 4,268,781 offenbart ein Antriebssystem für einen insbesondere in einer Drehbank, wobei die mechanisch abgegebene Leistung mit einem vorgegebenem Maximalwert verglichen wird und gegebenenfalls die Drehzahl reduziert wird.

Die US 2006/0226799 A1 zeigt einen Motor mit einer Endstufe, die den Motor mittels eines Puls-Breiten-Signals mit einem vorgegebenen Tastverhältnis ansteuert. Der Motorstrom wird gemessen, und wenn er größer als ein vorgegebener Grenzwert wird, wird er durch Verminderung des Tastverhältnisses reduziert.

Die US 4,707,646 A zeigt einen Gebläsemotor, dem einer Abhängigkeit vom statischen Druck eine maximale Drehzahl vorgegeben wird, die einen Betrieb des Gebläsemotors auf einem sicheren Niveau ermöglicht.

Wenn ein Lüfter von einem Elektromotor angetrieben wird, ergibt sich eine Kombination der Eigenschaften des Lüfters und der Eigenschaften des Elektromotors.

Es gibt verschiedene Bauarten von Lüftern, z.B, Radiallüfter, Querstromgebläse, Axiallüfter und Diagonallüfter, Radiallüfter unterscheidet man in Radiallüfter mit rückwärts gekrümmten Schaufeln und Radiallüfter mit vorwärts gekrümmten Schaufeln. Ebenso gibt es bei den anderen Bauarten viele weitere Unterbauarten.

Die Eigenschaften eines Lüfters ergeben sich aus der sogenannten Luftleistungskennlinie, die angibt, welche Luftmenge pro Stunde (m³/h) der Lüfter bei einem bestimmten Staudruck Δpf [Pascal] fördert, und aus der Motorkennlinie, welche angibt, wieviel Leistung der Motor benötigt, um eine bestimmte Luftmenge pro Stunde zu fördern.

Die benötigte Leistung ergibt sich ferner aus den Betriebsbedingungen des Lüfters: Wenn z.B. ein Lüfter Luft von außen in einen Raum bläst, bei dem alle Türen und Fenster geschlossen sind, wird der Lüfter bei maximalem Staudruck betrieben. Frei ausblasend bedeutet dagegen, dass der Lüfter frei in einem Raum steht und keine räumliche Trennung und auch keine Druckdifferenz zwischen seiner Ansaug- und Auslassseite besteht. Dies bedeutet, dass ein frei ausblasender Lüfter einen anderen Leistungsbedarf hat als ein Lüfter, der in das Innere eines geschlossenen Raumes Luft fördert.

Betrachtet man den Verlauf der Aufnahmeleistung einer Lüfteranordnung über dem erzeugten Luft-Volumenstrom, so sieht man, dass diese Leistung stark vom eingestellten Arbeitspunkt bzw. vom Druckaufbau im Lüfter abhängig ist. Z.B. wird bei einem Radiallüfter die maximale Leistung gewöhnlich frei ausblasend erreicht, also bei einer Druckerhöhung von Delta pf = 0, während sie bei einem Axiallüfter bei einer maximalen Druckerhöhung von Delta pf = Maximum erreicht wird.

Radiallüfter werden normalerweise bei höherem Staudruck eingesetzt. Arbeiten sie ohne Staudruck, also frei ausblasend, so werden sie an ihrer Leistungsgrenze betrieben, d.h. ein Radiallüfter muss für diesen Betriebspunkt ausgelegt werden, obwohl dieser in der Praxis selten und eher durch Zufall vorkommt. Dies begrenzt die Leistung eines solchen Lüfters bei anderen Betriebsbedingungen.

Es ist eine Aufgabe der Erfindung, eine neue Lüfteranordnung bereit zu stellen.

Diese Aufgabe wird gelöst durch den Gegenstand des Patentanspruchs 1.

Lüfteranordnungen sind normalerweise so ausgelegt, dass bei maximal zulässiger elektrischer Leistungsaufnahme die maximal zulässige Wicklungstemperatur des Elektromotors nicht überschritten wird. Dies bedeutet, dass bei vielen Anwendungen eine solche Lüfteranordnung "unterfordert" wird, d.h. an den meisten Arbeitspunkten arbeitet sie unterhalb ihrer maximal zulässigen Leistung.

Durch die Erfindung erreicht man, dass eine solche Lüfteranordnung an ihrer zulässigen Leistungsgrenze betrieben werden kann, d.h. mit demselben Lüfter erhält man eine verbesserte Luftleistungskennlinie. Die Überlegung ist dabei, die Lüfteranordnung immer im Bereich ihrer maximal zulässigen Leistung, also an der Leistungsgrenze, oder nahe bei dieser, zu betreiben, und dadurch mehr Volumenstrom bei gleichem Gegendruck zu erzielen, also die Luftleistung zu erhöhen, ohne dass man dazu eine größere Lüfteranordnung benötigt. Je nach Art der Lüfteranordnung können sich hierbei unterschiedliche Lösungen ergeben.

Für die Praxis ist ferner wichtig, dass die Benutzer daran gewöhnt sind, die Luftleistung eines Axiallüfters über eine Drehzahlregelung zu verändern. Dies kann aber zur Folge haben, dass bei maximaler Drehzahl die vom Lüfter aufgenommene Leistung zu hoch wird mit der Folge, dass der Elektromotor zu heiß wird. Dies ist bei einem Axiallüfter normalerweise erst dann der Fall, wenn der Staudruck Delta pf links des sogenannten Sattels sehr hoch wird. Der normale Arbeitsbereich eines Axiallüfters ist nämlich kurz unterhalb des Sattels, da es im Bereich des Sattels zu Strömungsabrissen an den Lüfterflügeln kommt, die eine drastische Erhöhung des Lüftergeräusches mit sich bringen.

Aus diesem Grund wird ein solcher Lüfter in einem großen Teil seines Betriebsbereichs mit einer normalen Drehzahlregelung betrieben. Wenn jedoch die vom Lüftermotor aufgenommene elektrische Leistung zu hoch wird, wird diese bei der nachfolgend beschriebenen Ausführungsform auf einen zulässigen Wert begrenzt. Auf diese Weise ist es möglich, den Lüfter bis zu einem vorgegebenen Volumenstrom drehzahlgeregelt und anschließend bei noch höherem Druck leistungsbegrenzt zu betreiben. Dies hat den Vorteil, dass die Luftleistung des Lüfters wie gewohnt über die Drehzahlregelung verändert werden kann. Nur in Bereichen maximaler Drehzahl wird in diesem Fall die Leistungsbegrenzung bei hohem Staudruck aktiv. Bei einem Axiallüfter ist dies normalerweise erst bei einem Staudruck links des "Sattels" der Fall. Der normale Arbeitsbereich eines Axiallüfters ist kurz unterhalb des "Sattels", und in diesem Bereich kann der Lüfter mit seiner Drehzahlregelung normal betrieben werden.

Durch den Betrieb des Lüftermotors an seiner Leistungsgrenze kann mit dem gleichen Lüfter eine deutlich höhere Luftleistung erzielt werden, was bei der Kühlung wichtig sein kann, besonders an heißen Tagen.

Weitere Einzelheiten und vorteilhafte Weiterbildungen ergeben sich aus den im folgenden beschriebenen und in der Zeichnung dargestellten, in keiner Weise als Einschränkung der Erfindung zu verstehenden Ausführungsbeispielen. Es zeigt:
- Fig. 1: eine Ausführungsform einer Lüfteranordnung mit einem leistungsbegrenzten Drehzahlregler,
- Fig. 2: eine perspektivische Darstellung eines Axiallüfters, hier in Form eines Gerätelüfters, wie er z.B. zur Kühlung von Desktops verwendet wird.
- Fig. 3: eine beispielhafte Lüfterkennlinie einer Lüfteranordnung nach Fig. 1,
- Fig. 4: eine Kennlinie der Leistungsaufnahme abhängig vom geförderten Luftvolumen pro Stunde [m³/h] bei einer Anordnung nach Fig. 1,
- Fig. 5: ein Diagramm zur Erläuterung eines Problems, wie es bei Fig. 1 in der Praxis auftreten kann,
- Fig. 6: eine Variante zu Fig. 1,
- Fig. 7: ein Schaubild zur Erläuterung von Fig. 6,
- Fig. 8: Messkurven, welche mit der Variante nach Fig. 6 aufgenommen wurden; sie zeigen den Staudruck Δpf in Abhängigkeit vom Volumenstrom V/t bei einer konstanten niedrigen Leistung und bei einer konstanten höheren Leistung,
- Fig. 9: Messkurven zu Fig. 6; diese zeigen die Drehzahl abhängig vom Volumenstrom bei niedriger konstanter Leistung und bei höherer konstanter Leistung,
- Fig. 10: den Motorstrom imot abhängig vom Volumenstrom V/t bei niedriger konstanter Leistung und bei höherer konstanter Leistung, und
- Fig. 11: die vom Motor 12 aufgenommene elektrische Leistung P (Watt) bei niedriger konstanter Leistung (Kurve 122) und bei höherer konstanter Leistung (Kurve 124); man erkennt, dass die Leistung im Betrieb praktisch konstant gehalten wird, so dass die Leistung des Motors voll ausgenutzt werden kann.

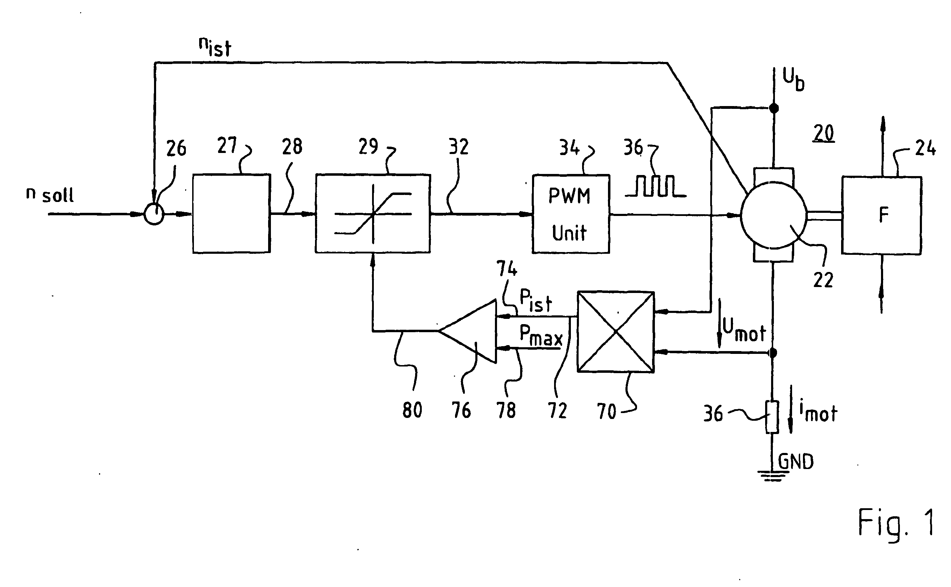

Fig. 1 zeigt eine bevorzugte Ausführungsform einer Lüfteranordnung 20 mit einem Elektromotor 22 und einem von diesem angetriebenen Lüfter 24. Letzterer kann ein Axiallüfter, ein Radiallüfter, ein Diagonallüfter, ein Querstromgebläse etc. sein.

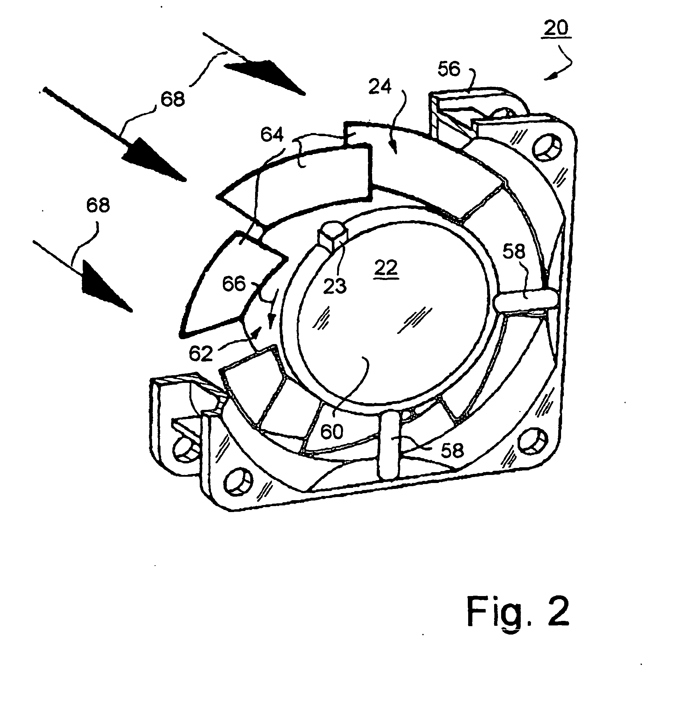

Die Drehzahl nᵢₛₜ des Motors 22 kann auf einen Wert nₛₒₗₗ geregelt werden. Häufig wird nₛₒₗₗ durch die Temperatur in der Umgebung der Lüfteranordnung 20 bestimmt, z.B. mittels eines Temperatursensors 23, wie er in Fig. 2 dargestellt ist. Dieser Sensor kann auch außerhalb des Lüfters 24 angeordnet werden.

Für die Drehzahlregelung wird außerdem die aktuelle Drehzahl nᵢₛₜ des Motors 22 fortlaufend erfasst und einem Vergleicher 26 zugeführt, ebenso die gewünschte Drehzahl nₛₒₗₗ, vgl. Fig. 1.

Das Ausgangssignal des Vergleichers 26 wird einem Regler 27 zugeführt, der je nach den Anforderungen z.B. ein P-Regler, ein PI-Regler oder ein PID-Regler sein kann. Der Regler 27 hat einen Ausgang 28, an dem man einen Stellwert erhält, der einem Begrenzer 29 zugeführt wird. Dieser begrenzt den Stellwert auf einen vorgegebenen Wert.

Das begrenzte Signal am Ausgang 32 des Begrenzers 29 wird einem PWM-Modul 34 zugeführt und dort in ein PWM-Signal 36 umgeformt, das dem Motor 22 zugeführt wird und den Strom iₘₒₜ in diesem steuert. Solche PWM-Module sind bekannt.

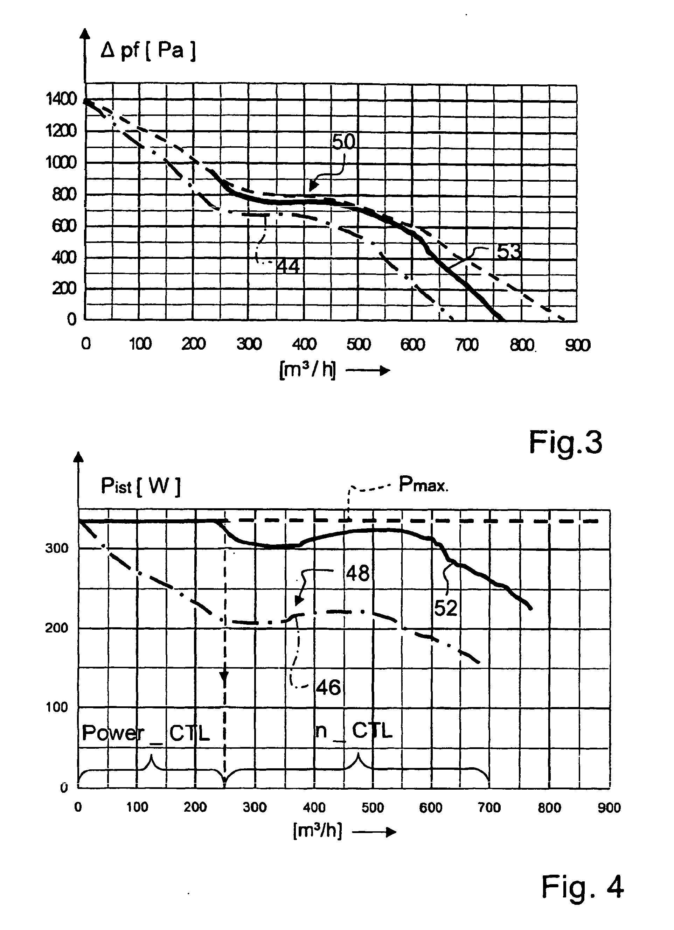

Eine Lüfteranordnung gemäß Fig. 1 wird im Normalfall so ausgelegt, dass ihre Lüfterkennlinie (Fig. 3) bei einem vorgegebenen Staudruck Delta pf, der in Fig. 3 z.B. 1400 Pa beträgt, die Förderleistung von 0 m³/h erreicht, ohne dass hierzu besondere Maßnahmen erforderlich wären, vgl. die Kurven 44 in Fig. 3 und 46 in Fig. 4.

Die Kurven 44, 46 eines Axiallüfters, wie er in Fig. 2 dargestellt ist, haben einen sogenannten Sattel, der in Fig. 4 mit 48 und in Fig. 3 mit 50 bezeichnet ist.

Im Normalfall werden solche Lüfter kurz unterhalb des Sattels 48 bzw. 50 und bei niedrigem Staudruck betrieben, also bei Fig. 3 und 4 z.B. bei einer Förderleistung von etwa 400 bis 500 m³/h. Der Grund ist, dass ein solcher Lüfter im Bereich des Sattels 48, 50 und oberhalb desselben sehr intensive Geräusche erzeugen kann.

Fig. 2 zeigt als Beispiel zur Erläuterung einen typischen Axiallüfter 24 mit einem Lüftergehäuse 56. das aufgeschnitten dargestellt ist und in dem mittels Stegen 58 eine Nabe 60 befestigt ist, an der ein Rotor 62 gelagert ist, auf dessen Außenseite Lüfterschaufeln 64 befestigt sind, die sich im Betrieb in Richtung eines Pfeiles 66 drehen und dadurch Luft in Richtung von Pfeilen 68 fördern.

Der Motor 22 eines solchen Axiallüfters ist im Normalfall darauf ausgelegt, dass er auf den Kurven 44, 46 der Fig. 3 und 4 arbeitet. Dies bedeutet z.B. in Fig. 4, dass bei einer maximalen Leistung von 340 W die Förderleistung 0 m³/h beträgt. Der Motor 22 eines normalen Lüfters begrenzt also die von ihm aufgenommene Leistung Pᵢₛₜ selbst und ist konstruktiv hierfür ausgelegt.

Anders im vorliegenden Fall: Wie **Fig. 4** zeigt, begrenzt gemäß der Kurve 52 der Lüftermotor 22 im Bereich von 250 bis 800 m³/h durch seine Bauweise die von ihm aufgenommene Leistung Pᵢₛₜ auf einen Wert, der kleiner als Pmax ist, d.h. in diesem Bereich kann der Motor 22 mit einer normalen Drehzahlregelung betrieben werden, weil seine Leistungsaufnahme Pᵢₛₜ kleiner als Pmax ist, so dass hier keine zusätzlichen Eingriffe notwendig sind.

Geht man jedoch in Fig. 3 und 4 weiter nach links, also in den Bereich 0 bis 250 m³/h, so erkennt man, dass bei Werten unterhalb von etwa 250 m³/h die zulässige Leistung Pmax des Motors 22 überschritten würde, weil der Motor 22 (anders als ein "normaler" Motor mit der Luftleistungskurve 46) eine niedrigere induzierte Spannung hat, d.h. er hat weniger Statorwindungen, die aus einem dickeren Draht hergestellt sind, so dass er in Fig. 4 gemäß der Kurve 52 im Bereich zwischen 0 und 250 m³/h die zulässige Leistung Pmax überschreiten würde, die bei diesem Beispiel 340 W beträgt.

Dadurch bestünde die Gefahr, dass der Motor 22 überhitzt wird und als Folge hiervon beschädigt oder zerstört würde. Dies muss verhindert werden, und aus diesem Grund hat die Lüfteranordnung gemäß Fig. 1 eine Leistungsbegrenzung, welche das Überschreiten von Pmax verhindert. Die Lüfteranordnung arbeitet also hier mit Power_CTL, wie in Fig. 4 angegeben.

Diese Leistungsbegrenzung erfasst die Spannung uₘₒₜ am Motor 22 und den Strom imot durch den Motor 22, letzteren z.B. an einem Messwiderstand 36. Diese beiden Werte werden in einem Multiplikator 70 miteinander multipliziert, und man erhält am Ausgang 72 des Multiplikators 70 die Leistung Pᵢₛₜ, die dem einen Eingang 74 eines Vergleichers 76 zugeführt wird, dessen anderem Eingang 78 ein Wert für die zulässige Leistung Pmax zugeführt wird. Das Signal am Ausgang 80 des Vergleichers 76 wird dem Begrenzer 29 zugeführt und begrenzt dadurch den Stellwert am Ausgang 32 des Begrenzers 29, aber erst, wenn Pᵢₛₜ größer wird als Pmax. Auf diese Weise kann die zulässige Leistung Pmax nicht überschritten werden. Alternativ kann mit dem Signal am Ausgang 80 auch das Tastverhältnis des PWM-Signals 36 direkt in der erforderlichen Weise beeinflusst werden.

Durch die Erfindung wird also die Lüfteranordnung 22 so beeinflusst, so dass der Lüfter 24 (beliebiger Bauart) gerade bei hohen Staudrücken mit seiner vollen Leistung arbeitet und dort mehr Luft fördert, natürlich bei höherer Leistungsaufnahme.

Sehr vorteilhaft ist, dass für die Drehzahlregelung ein Standard-Regelkreis verwendet werden kann, bei dem die Lüfterdrehzahl über Pulsweitenmodulation geregelt wird. Abweichend von der Standardlösung wird jedoch das Stellsignal für das PWM-Modul 34 begrenzt, sobald die maximale Motorleistung Pmax erreicht wird. Alternativ kann auch das Tastverhältnis des PWM-Signals 36 direkt bei Erreichen der Leistungsgrenze begrenzt werden.

Die Kennlinien 52 in Fig. 4 und 53 in Fig. 3 zeigen beispielhaft die Wirkungsweise. Die Lüfteranordnung 20 läuft bis zu einem Volumenstrom von ca. 250 m³/h drehzahlgeregelt, und wird dann bei noch höherem Druck in der Leistung begrenzt. Dies hat den Vorteil, dass die Luftleistung der Lüfteranordnung 20 wie gewohnt über die Drehzahlregelung n_CTL verändert werden kann. Nur bei maximaler Drehzahl wird in diesem Fall die Leistungsbegrenzung bei hohem Staudruck zusätzlich aktiv.

Die beschriebene Anordnung ist für alle Arten von Lüftern sehr vorteilhaft, da der Anwender das gewohnte Verhalten eines drehzahlgeregelten Lüfters wiederfindet, aber bei erhöhter Luftleistung des Lüfters.

Durch den Betrieb des Lüftermotors 22 an seiner maximalen Leistungsgrenze (Pₘₐₓ in Fig. 4) kann mit dem gleichen Lüfter eine deutlich höhere Luftleistung erzielt werden. Es wird also möglich, solche Lüfter immer mit der maximal zulässigen Leistung zu betreiben und dadurch mehr Volumenstrom bei gleichem Gegendruck zu erzielen, d.h. die Kennlinie des Lüfters wird elektronisch modifiziert, um den Lüfter besser auszunutzen.

Das gleiche Arbeitsprinzip ist z.B. auch bei Radiallüftern möglich, wo sich ebenfalls eine deutliche Erhöhung der Luftleistung ergibt. Auch solche Radiallüfter sollten dann bevorzugt eine reduzierte Wicklungszahl ihrer Statorwicklung haben, wobei der Drahtdurchmesser erhöht wird, um den gleichen Kupferfüllfaktor zu erzielen.

Wenn die Betriebsspannung Ub einer solchen Lüfteranordnung 20 schwankt, ergeben sich bei unterschiedlichen Spannungen Ub unterschiedliche Motorströme imot. Eine solche Anordnung 20 wird standardmäßig so ausgelegt, dass sie bei Nennspannung die maximal geforderte Leistung erreicht, und dass bei Überspannung der Motorstrom imot reduziert wird. Deshalb wird der Motor 22 nicht schlechter ausgenutzt als bei vergleichbaren Anordnungen 20 nach dem Stand der Technik.

Bei der Anordnung nach Fig. 1 ist die Leistungsbegrenzung (Multiplizierer 70, Vergleicher 76) dem Drehzahlregler (Elemente 26, 27) übergeordnet. Dies bedeutet, dass keine Drehzahlerhöhung mehr möglich ist, wenn die gemessene Leistung Pᵢₛₜ den Wert Pmax (am Eingang 78 des Vergleichers 76) überschreitet.

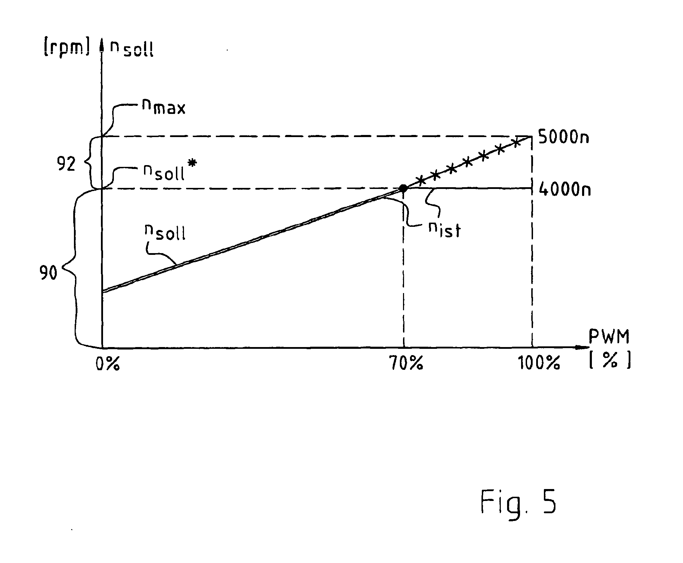

Dieser Fall ist in Fig. 5 schematisch dargestellt. Dort ist auf der Abszisse das Tastverhältnis am Ausgang des PWM-Moduls 34 dargestellt, und auf der Ordinate die gewünschte Drehzahl (Solldrehzahl) nₛₒₗₗ.

Ferner ist diejenige Solldrehzahl nₛₒₗₗ*, hier als Beispiel 4000 U/min dargestellt, bei der der Motor 22 mit seiner maximalen Leistung Pmax, hier als Beispiel 100 W, arbeitet. Diese Drehzahl nₛₒₗₗ* ist kein konstanter Wert. Z. B. hängt sie bei einem Lüfter vom sog. Staudruck Δ_{pf} ab, d. h. wenn der Lüfter ein Radiallüfter ist und der Luftstrom an seinem Auslass gedrosselt wird, nimmt der Staudruck zu, und die maximal zulässige Leistung, also im Beispiel 100 W, wird z. B. schon bei einer Solldrehzahl von nₛₒₗₗ = 3500 U/min erreicht. In diesem Fall wäre es also nicht möglich, eine Drehzahl über 3500 U/min einzustellen, weil dies durch den Leistungsregler verhindert würde.

Wenn also die maximale Leistung erreicht ist, kann die Drehzahl nicht weiter erhöht werden, d. h. obwohl der Benutzer eine höhere Drehzahl nₛₒₗₗ einstellt, hat diese Einstellung keinen Einfluss auf die tatsächliche Drehzahl nᵢₛₜ des Motors 22.

Dies ist in Fig. 5 schematisch dargestellt. Dort sind nur die Drehzahlen in einem Bereich 90 bis herauf zur Drehzahl nₛₒₗₗ* einstellbar, nicht aber die Drehzahlen in einem Bereich 92 von nₛₒₗₗ* bis nₘₐₓ. Deshalb ist dieser Teil der Kurve nₛₒₗₗ mit Kreuzen markiert.

Bei einer Bedienungsperson könnte dies den Eindruck hervorrufen, dass der Drehzahlregler 26, 27 defekt sei.

In Fig. 5 ist auch die Kurve für den tatsächlichen Wert nᵢₛₜ der Drehzahl dargestellt. Bis zum Wert nₛₒₗₗ* verlaufen die Kurven für nₛₒₗₗ und nᵢₛₜ identisch, aber oberhalb von nₛₒₗₗ* bleibt nᵢₛₜ konstant, auch wenn nₛₒₗₗ weiter erhöht wird.

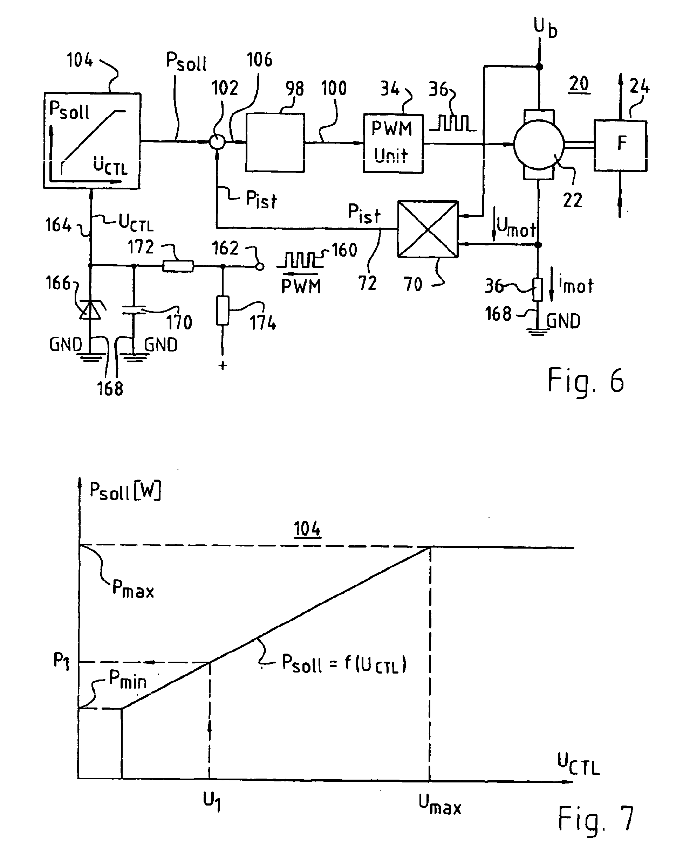

Dieses Problem wird vermieden durch die Anordnung nach Fig. 6, wobei diese Anordnung nicht Gegenstand der Erfindung ist. Dort werden für gleiche oder gleich wirkende Teile dieselben Bezugszeichen verwendet wie in Fig. 1.

Bei Fig. 7 wird ein Steuersignal U_{CTL} in ein Signal für einen zulässigen Leistungs-Sollwert Psoll umgewandelt, der z. B. zwischen Pmin = 5 W und Pmax = 100 W liegen kann, und die Drehzahl nᵢₛₜ des Motors 20 wird so lange verändert, bis dieser die mittels U_{CTL} eingestellte Leistung erzeugt. Es handelt sich also um einen Leistungsregler.

In Fig. 6 ist ein Regler 98 vorgesehen, der gleich aufgebaut sein kann wie der Regler 27 der Fig. 1. Sein Ausgang 100 ist mit dem Eingang der PWM-Einheit 34 verbunden, d. h. die Größe des Signals am Ausgang 100 bestimmt das Tastverhältnis des PWM-Signals 36 am Ausgang der PWM-Einheit 34. Dabei wird zur Erleichterung des Verständnisses angenommen, dass ein Anstieg des Signals am Ausgang 100 einem Anstieg des Tastverhältnisses und einem Anstieg des Motorstroms iₘₒₜ entspricht, wie das bei den meisten Motoren der Fall ist.

Im Multiplizierer 70 wird durch Multiplikation von imot und uₘₒₜ die vom Motor 22 aufgenommene Leistung Pᵢₛₜ berechnet, und dieser Wert Pᵢₛₜ wird einem Vergleicher 102 zugeführt.

Dem Vergleicher 102 wird ferner von einer Sollwerteinheit 104 der Leistungs-Sollwert Psoll zugeführt, und das Ausgangssignal 106 des Vergleichers 102 wird dem Regler 98 zugeführt, der über die PWM-Einheit 34 den Wert Pᵢₛₜ so lange verändert, bis Pᵢₛₜ = Psoll ist.

Ferner zeigt Fig. 6 als Beispiel, wie aus einem PWM-Signal 160, das einem Anschluss 162 zugeführt wird, das Steuersignal U_{CTL} erzeugt werden kann, das einem Eingang der Sollwerteinheit 104 zugeführt wird.

Der Eingang 164 ist an die Katode einer Z-Diode 166 angeschlossen, deren Anode an Masse 168 liegt und zu der ein Kondensator 170 parallel geschaltet ist. Zwischen dem Eingang 164 und dem Anschluss 162 liegt ein Widerstand 172. Der Anschluss 162 ist über einen Widerstand 174 mit einer positiven Spannung verbunden, z.B. + 5 V.

Das PWM-Signal 160 wird durch das RC-Glied 172, 170 geglättet. Die Z-Diode 166 verhindert Spannungsspitzen im Steuersignal U_{CTL}. Dieses wird in der Sollwerteinheit 104 in einen Leistungs-Sollwert Pₛₒₗₗ für den Motor 22 umgesetzt, der, wie beschrieben, dem Vergleicher 102 zugeführt wird. Auf diese Weise kann das PWM-Signal 160 in einen Leistungs-Sollwert für den Motor 22 umgesetzt werden, wobei dieser Sollwert mit zunehmendem Tastverhältnis des PWM-Signals 160 zunimmt.

Fig. 7 erläutert die Sollwerteinheit 104 der Fig. 6. Diese wandelt ein Steuersignal U_{CTL} in ein Signal Pₛₒₗₗ für die gewünschte Leistung des Motors 22 um. Dabei kann der Wert Pₘₐₓ in geeigneter Weise eingestellt werden, z. B. durch Verwendung einer Z-Diode, mit deren Hilfe eine konstante Spannung erzeugt wird, die z. B. der maximalen Leistung Pmax entsprechen kann. An diese Spannung wird dann ein Spannungsteiler angeschlossen, an dem ein Wert zwischen Pmin und Pmax eingestellt werden kann. Fig. 7 zeigt als Beispiel eine Spannung U1, die in eine Soll-Leistung P1 umgesetzt wird.

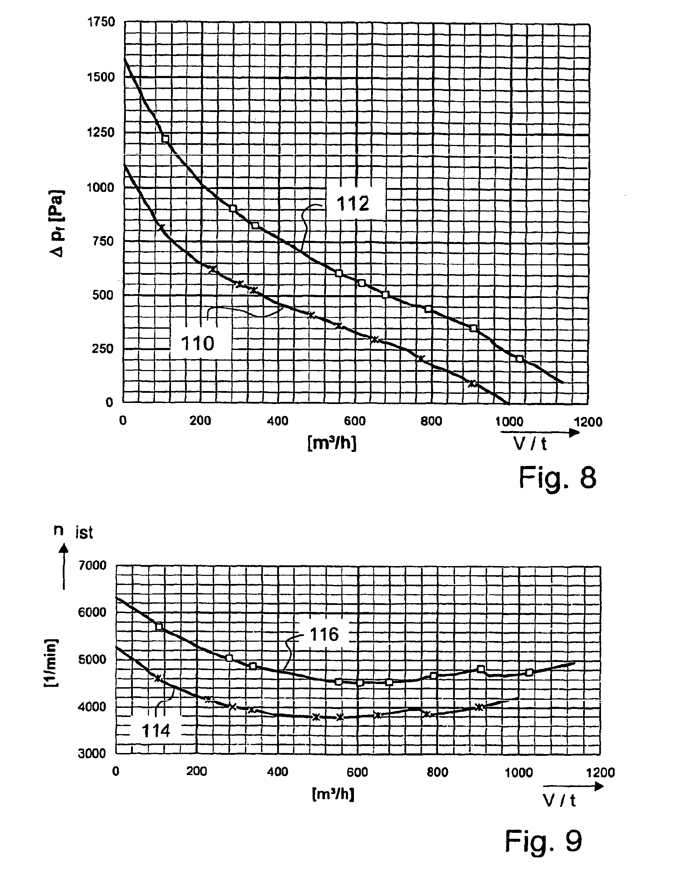

Die **Fig. 8 bis 11** zeigen Messwerte für die Leistungsregelung gemäß Fig. 6 bei einem Radiallüfter RER190 der Firma ebm-papst, bei zwei unterschiedlichen eingestellten Leistungen, nämlich einer niedrigen Leistung von etwa 135 W, und einer höheren Leistung von etwa 235 W.

**Fig. 8** zeigt den Staudruck Δpf als Funktion des Volumenstroms. Die Kurve 110 zeigt den Verlauf bei einer konstanten Leistung, die auf 135 W geregelt war, und die Kurve 112 zeigt den Verlauf bei einer konstanten Leistung von etwa 235 W. Die Kurven verlaufen etwa parallel zueinander. Der Volumenstrom wurde in der üblichen Weise mittels einer Messdüse verändert.

**Fig. 9** zeigt die Drehzahl nᵢₛₜ als Funktion des Volumenstroms. Die Kurve für 135 W ist mit 114 bezeichnet, die Kurve für 235 W mit 116. Der Volumenstrom wurde in üblicher Weise mittels einer Messdüse verändert.

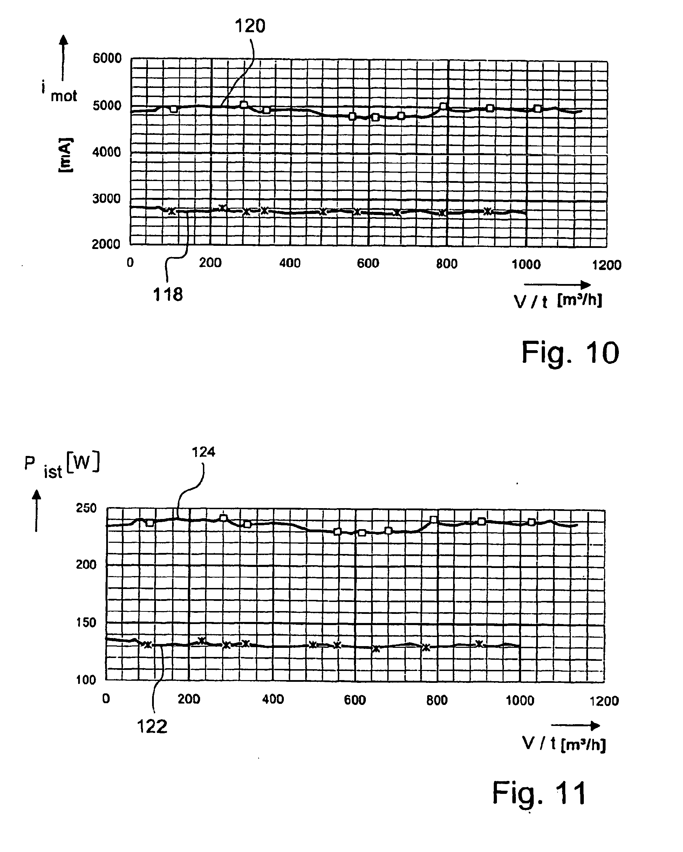

**Fig. 10** zeigt den Motorstrom imot als Funktion des Volumenstroms. Da in Fig. 6 die Gleichspannung Ub (hier 48 V) konstant gehalten wurde, wird durch den Leistungsregler 98 der Strom imot konstant gehalten. Die Kurve für 135 W ist mit 118 bezeichnet, wobei sich ein Strom von etwa 2,8 A ergab, und die Kurve für 235 W ist mit 120 bezeichnet, wobei der Strom etwa 5 A betrug. Der Volumenstrom wurde auch hier mit einer (nicht dargestellten) Messdüse verändert.

**Fig. 11** zeigt die vom Motor 22 aufgenommene elektrische Leistung Pᵢₛₜ als Funktion des Volumenstroms. Die Kurve 122 zeigt den Verlauf für eine konstante Leistung von 135 W, und die Kurve 124 zeigt den Verlauf für eine konstante Leistung von 235 W. Der Volumenstrom wurde mittels einer nicht dargestellten Messdüse verändert.

Die Einstellung der konstanten Leistung erfolgte bei Fig. 6 bis 11 mittels der Steuerspannung U_{CTL}, die bei diesem Beispiel für die niedrigere Leistung (135 W) 5 V und die höhere Leistung (235 W) 10 V betrug.

Naturgemäß sind im Rahmen der vorliegenden Erfindung vielfache Abwandlungen und Modifikationen möglich.

## Patentansprüche

1. Lüfteranordnung mit einem von einem Elektromotor (22) angetriebenen Lüfter (24), welche Lüfteranordnung (20) aufweist:
Eine Vorrichtung (70) zur Erfassung der vom Elektromotor (22) im Betrieb aufgenommenen elektrischen Leistung (Pᵢₛₜ);
Eine Eingabevorrichtung zur Eingabe einer gewünschten Drehzahl (nₛₒₗₗ) dieses Elektromotors (22);
eine Vergleichsvorrichtung (26) zum Vergleich der gewünschten Drehzahl (nₛₒₗₗ) mit der tatsächlichen Drehzahl (nᵢₛₜ) dieses Elektromotors (22);
einen Regler (27), welcher mit dem Ausgang der Vergleichsvorrichtung (26) verbunden ist und welcher im Betrieb die Drehzahl des Elektromotors (22) mittels eines Pulsweitenmodulations-Moduls (34) regelt;
einen Vergleicher (76; 102), welcher im Betrieb die vom Elektromotor (22) aufgenommene elektrische Leistung (Pᵢₛₜ) mit einem vorgegebenen Wert (Pₘₐₓ) vergleicht, welcher charakteristisch für eine maximal zulässige Motorleistung ist,
und welcher dazu ausgebildet ist, abhängig vom Resultat des Vergleichs ein Ausgangssignal (80; 106) zu erzeugen;
und eine elektronische Begrenzungsanordnung (29; 98), welcher dieses Ausgangssignal (80; 106) zuführbar ist, und welche dazu ausgebildet ist, die Ausgangssignale (36) des Pulsweitenmodulations-Moduls (34) zu begrenzen, wenn die vom Elektromotor (22) aufgenommene elektrische Leistung (Pᵢₛₜ) die maximal zulässige Motorleistung (Pₘₐₓ) überschreitet,
um bei einer solchen Überschreitung eine Überlastung des Elektromotors (22) zu vermeiden.

2. Lüfteranordnung nach Anspruch 1, bei welcher zur Erfassung der vom Elektromotor (22) aufgenommenen elektrische Leistung (Pᵢₛₜ) eine Vorrichtung (70) zur Multiplikation einer von einem erfassten Motorstrom (iₘₒₜ) abhängigen Größe mit einer von der erfassten Motorspannung (uₘₒₜ) abhängigen Größe vorgesehen ist.

3. Lüfteranordnung nach Anspruch 1 oder 2, bei welcher zur Erzeugung des Steuersignals (36) für den Strom (Iₘₒₜ), der dem Elektromotor (22) Im Betrieb zugeführt wird, ein PWM-Generator (34) vorgesehen ist,

4. Lüfteranordnung nach Anspruch 3, bei welcher bei Erreichen *des Werts (Pₘₐₓ), welcher charakteristisch für eine maximal zulässige Motorleistung ist,* (*Pₘₐₓ*) die PWM-Signale (36) modifiziert werden, um die (*Pₘₐₓ*) *vom Elektromotor (22) im Betrieb aufgenommene elektrische Leistung* zu begrenzen.

5. Lüfteranordnung nach Anspruch 4, bei welcher zur Leistungsbegrenzung ein Eingangssignal des PWM-Generators (34) begrenzt wird.

6. Lüfteranordnung nach Anspruch 4, bei welcher zur Leistungsbegrenzung die Ausgangssignale (36) des PWM-Generators (34) entsprechend beeinflusst werden.

7. Lüfteranordnung nach Anspruch 4 oder 5, bei welcher der PWM-Generator (34) vom Ausgang des Reglers (27) über einen Begrenzer (29) gesteuert ist, und die Begrenzung des PWM-Signals (36) durch eine entsprechende Ansteuerung des Begrenzers (29) erfolgt.

8. Lüfteranordnung nach einem der vorhergehenden Ansprüche, bei welcher der Motor (22) für eine höhere Drehzahl ausgelegt ist als für die Drehzahl, bei der er betrieben wird.

9. Lüfteranordnung nach *einem der vorhergehenden Ansprüche,* bei welcher *Anzahl von Windungen des Motors gegenüber der Anzahl von Windungen eines Motors reduziert ist, der durch seine Bauweise die von ihm aufgenommene elektrische Leistung (Pᵢₛₜ) auf einen Wert begrenzt, der kleiner als der Wert (Pₘₐₓ) ist, welcher charakteristisch für eine maximal zulässige Motorleistung ist*, wobei die Windungen bei dem Motor mit der reduzierten Anzahl von Windungen einen erhöhten Drahtdurchmesser aufweisen.

10. *Lüfteranordnung nach einem der vorhergehenden Ansprüche, bei welcher der Motor (22) eine Anzahl von Windungen hat, die in einem Betriebsbereich (Power_CTL) der Lüfteranordnung dazu führt, dass die vom Elektromotor (22) aufgenommene elektrische Leistung (Pᵢₛₜ) ohne die elektronische Begrenzungsanordnung (29; 98) größer wäre als der Wert (Pₘₐₓ), welcher charakteristisch für die maximal zulässige Motorleistung ist.*

## Claims

1. Fan arrangement with a fan (24) driven by an electric motor (22), which fan arrangement (20) has:
a device (70) for detecting the electric power (P_{actual}) consumed by the electric motor (22) in operation;
an input device for entering a desired speed (n_{target}) of this electric motor (22);
a comparison device (26) for comparing the desired speed (n_{target}) with the actual speed (n_{actual}) of this electric motor (22);
a controller (27), which is connected to the output of the comparison device (26) and which adjusts the speed of the electric motor (22) by means of a pulse-width-modulation module (34) in operation;
a comparator (76; 102), which compares the electric power (P_{actual}) consumed by the electric motor (22) in operation with a predetermined value (Pₘₐₓ), which is characteristic of a maximum permitted motor power, and
which is formed to generate an output signal (80; 106) as a function of the result of the comparison;
and an electronic limiting arrangement (29; 98), to which this output signal (80; 106) can be supplied, and which is formed to limit the output signals (36) of the pulse-width-modulation module (34) if the electric power (P_{actual}) consumed by the electric motor (22) exceeds the maximum permitted motor power (Pₘₐₓ), in order to avoid an overload of the electric motor (22) in the event of such exceeding.

2. Fan arrangement according to claim 1, in which to detect the electric power (P_{actual}) consumed by the electric motor (22), a device (70) is provided for multiplying a magnitude dependent on a detected motor current (Iₘₒₜ) by a magnitude dependent on the detected motor voltage (Uₘₒₜ).

3. Fan arrangement according to claim 1 or 2, in which to generate the control signal (36) for the current (Iₘₒₜ), which is supplied to the electric motor (22) in operation, a PWM generator (34) is provided.

4. Fan arrangement according to claim 3, in which on reaching the value (Pₘₐₓ), which is characteristic of a maximum permitted motor power, the PWM signals (36) are modified, in order to limit the electric power consumed by the electric motor (22) in operation.

5. Fan arrangement according to claim 4, in which to limit the power an input signal of the PWM generator (34) is limited.

6. Fan arrangement according to claim 4, in which to limit the power the output signals (36) of the PWM generator (34) are influenced accordingly.

7. Fan arrangement according to claim 4 or 5, in which the PWM generator (34) is controlled by the output of the controller (27) via a limiter (29), and the limiting of the PWM signal (36) takes place due to a corresponding activation of the limiter (29).

8. Fan arrangement according to one of the preceding claims, in which the motor (22) is rated for a higher speed than for the speed at which it is operated.

9. Fan arrangement according to one of the preceding claims, in which the number of turns of the motor is reduced compared to the number of turns of a motor that by its design limits the electric power (P_{actual}) which it consumes to a value that is smaller than the value (Pₘₐₓ), which is characteristic of a maximum permitted motor power, wherein the turns in the motor with the reduced number of turns have an increased wire diameter.

10. Fan arrangement according to one of the preceding claims, in which the motor (22) has a number of turns that leads in an operating range (Power_CTL) of the fan arrangement to the fact that the electric power (P_{actual}) consumed by the electric motor (22) without the electronic limiting arrangement (29; 98) would be greater than the value (Pₘₐₓ), which is characteristic of the maximum permitted motor power.

## Revendications

1. Ensemble ventilateur comportant un ventilateur (24) entraîné par un moteur électrique (22), lequel ensemble ventilateur (20) présente :
un dispositif (70) de détection de la puissance électrique (Pᵢₛₜ) absorbée par le moteur électrique (22) en fonctionnement ;
un dispositif d'entrée permettant d'entrer une vitesse de rotation souhaitée (nₛₒₗₗ) de ce moteur électrique (22) ;
un dispositif de comparaison (26) permettant de comparer la vitesse de rotation souhaitée (nₛₒₗₗ) avec la vitesse de rotation effective (nᵢₛₜ) de ce moteur électrique (22) ;
un régulateur (27) qui est relié à la sortie du dispositif de comparaison (26) et qui régule en fonctionnement la vitesse de rotation du moteur électrique (22) au moyen d'un module de modulation de largeur d'impulsion (34) ;
un comparateur (76 ; 102) qui compare en fonctionnement la puissance électrique (Pᵢₛₜ) absorbée par le moteur électrique (22) avec une valeur prédéfinie (Pₘₐₓ) qui est caractéristique d'une puissance de moteur maximale admissible et qui est conçu pour générer un signal de sortie (80 ; 106) en fonction du résultat de la comparaison ;
et un dispositif de limitation électronique (29 ; 98) auquel ce signal de sortie (80 ; 106) peut être amené et qui est conçu pour limiter les signaux de sortie (36) du module de modulation de largeur d'impulsion (34) quand la puissance électrique (Pᵢₛₜ) absorbée par le moteur électrique (22) dépasse la puissance de moteur maximale admissible (Pₘₐₓ),
pour éviter une surcharge du moteur électrique (22) dans le cas d'un tel dépassement.

2. Ensemble ventilateur selon la revendication 1, dans lequel un dispositif (70) permettant de multiplier une grandeur dépendante d'un courant de moteur (Iₘₒₜ) détecté par une grandeur dépendante de la tension de moteur (Uₘₒₜ) détectée est prévu pour détecter la puissance électrique (Pᵢₛₜ) absorbée par le moteur électrique (22).

3. Ensemble ventilateur selon la revendication 1 ou 2, dans lequel un générateur PWM (34) est prévu pour générer le signal de commande (36) pour le courant (Iₘₒₜ) qui est amené au moteur électrique (22) en fonctionnement.

4. Ensemble ventilateur selon la revendication 3, dans lequel, en cas d'atteinte de la valeur (Pₘₐₓ) qui est caractéristique d'une puissance de moteur maximale admissible, les signaux PWM (36) sont modifiés pour limiter la puissance électrique absorbée par le moteur électrique (22) en fonctionnement.

5. Ensemble ventilateur selon la revendication 4, dans lequel, pour limiter la puissance, un signal d'entrée du générateur PWM (34) est limité.

6. Ensemble ventilateur selon la revendication 4, dans lequel, pour limiter la puissance, les signaux de sortie (36) du générateur PWM (34) sont influencés de façon correspondante.

7. Ensemble ventilateur selon la revendication 4 ou 5, dans lequel le générateur PWM (34) est commandé par la sortie du régulateur (27) via un limiteur (29),
et la limitation du signal PWM (36) est réalisée par une commande correspondante du limiteur (29).

8. Ensemble ventilateur selon une des revendications précédentes, dans lequel le moteur (22) est dimensionné pour une vitesse de rotation plus élevée que pour la vitesse de rotation à laquelle il est utilisé.

9. Ensemble ventilateur selon une des revendications précédentes, dans lequel le nombre de spires du moteur est réduit par rapport au nombre de spires d'un moteur qui, par sa construction, limite la puissance électrique (Pᵢₛₜ) absorbée par lui à une valeur qui est plus petite que la valeur (Pₘₐₓ) qui est caractéristique d'une puissance de moteur maximale admissible, les spires sur le moteur ayant le nombre réduit de spires présentant un diamètre de fil plus élevé.

10. Ensemble ventilateur selon une des revendications précédentes, dans lequel le moteur (22) a un nombre de spires qui a pour effet, dans une plage de fonctionnement (Power_CTL) de l'ensemble ventilateur, que la puissance électrique (Pᵢₛₜ) absorbée par le moteur électrique (22) sans le dispositif de limitation électronique (29 ; 98) serait plus grande que la valeur (Pₘₐₓ) qui est caractéristique de la puissance de moteur maximale admissible.
